(19) Europäisches Patentamt / European Patent Office / Office européen des brevets

(11) **EP 3 954 926 B1**

(12) **EUROPÄISCHE PATENTSCHRIFT**

(45) Veröffentlichungstag und Bekanntmachung des Hinweises auf die Patenterteilung:
**08.04.2026   Patentblatt 2026/15**

(21) Anmeldenummer: **21190250.7**

(22) Anmeldetag: **09.08.2021**

(51) Internationale Patentklassifikation (IPC):
**F16H 61/42** (2010.01)   **F16H 61/47** (2010.01)
**F16H 61/472** (2010.01)   **F16H 61/478** (2010.01)
F16H 61/44 (2006.01)   F16H 47/02 (2006.01)

(52) Gemeinsame Patentklassifikation (CPC):
**F16H 61/47; F16H 61/42; F16H 61/472;**
**F16H 61/478;** F16H 61/44; F16H 2047/025

(54) **VERFAHREN ZUR REALISIERUNG EINER IN DER LEISTUNG LIMITIERBAREN DREHMOMENTE- UND DREHZAHLSCHNITTSTELLE FÜR HYDROSTATISCHE FAHRANTRIEBE**

METHOD FOR IMPLEMENTING A TORQUE AND ROTATIONAL SPEED INTERFACE FOR HYDROSTATIC TRAVELLING DRIVES WITH PERFORMANCE THAT CAN BE LIMITED

PROCÉDÉ DE RÉALISATION D'UNE INTERFACE DE COUPLE ET DE VITESSE DE ROTATION À PERFORMANCES LIMITÉES POUR TRANSMISSIONS HYDROSTATIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **12.08.2020   DE 102020210196**

(43) Veröffentlichungstag der Anmeldung:
**16.02.2022   Patentblatt 2022/07**

(73) Patentinhaber: **Robert Bosch GmbH**
**70442 Stuttgart (DE)**

(72) Erfinder:
• **Mutschler, Steffen**
  **89233 Neu-Ulm (DE)**
• **Hagg, Christian**
  **89278 Nersingen (DE)**
• **Xiang, Yusheng**
  **89077 Ulm (DE)**
• **Behm, Martin**
  **89073 Ulm (DE)**
• **Brix, Norman**
  **89340 Leipheim (DE)**

(56) Entgegenhaltungen:
DE-A1- 102013 217 708     DE-A1- 102014 224 337
DE-A1- 102016 207 228     DE-A1- 102017 207 522

EP 3 954 926 B1

**Beschreibung**

TECHNISCHER BEREICH

Die Erfindung betrifft ein Verfahren zur Leistungslimitierung eines hydrostatischen Fahrantriebs, wobei der Fahrantrieb mit einer Hydropumpe zur Druckmittelversorgung eines mit einem Abtrieb koppelbaren Hydromotors des Fahrantriebes versehen ist, wobei der durch die Hydropumpe erzeugte Druck und der durch die Hydropumpe erzeugte Volumenstrom mittels Beeinflussung eines Stelldrucks regelbar ist.

STAND DER TECHNIK

Es sind hydrostatische Fahrantriebe für mobile Arbeitsmaschinen bekannt, bei denen eine Hydropumpe und ein oder mehrere Hydromotoren in einem geschlossenen hydraulischen Kreis miteinander verbunden sind. Die Hydropumpe wird von einem Verbrennungsmotor - z.B. einem Dieselmotor - angetrieben, und die Hydromotoren treiben schließlich die mobile Arbeitsmaschine - z.B. über ein jeweiliges Rad - an.

Die Hydropumpe derartiger Fahrantriebe ist oft in ihrem Fördervolumen verstellbar. Damit kann z. B. bei konstanter Drehzahl des Verbrennungsmotors der von der Hydropumpe geförderte Volumenstrom im geschlossenen Kreis verändert werden und damit eine Abtriebsdrehzahl der Hydromotoren bzw. der Räder - also eine Fahrgeschwindigkeit der mobilen Arbeitsmaschine - verstellt werden.

Ein hydrostatischer Fahrantrieb nach dem Stand der Technik ist in DE 10 2014 224337 A1 offenbart.

Hydrostatische Axialkolbenpumpen werden u.a. in Fahrantrieben von Baumaschinen eingesetzt. Eine Teilfunktion dieser Pumpen ist es den maximal zulässigen Druck zu begrenzen. Dies ist notwendig um u.a. Momente zu limitieren als auch zulässige Maximaldrücke der Komponenten zu limitieren.

Neben dem Einsatz von verlustbehafteten Druckbegrenzungsventilen (Volumenstrom der Pumpe wird in den Tank abgesteuert) kommen Hydromechanische Druckregelventile zum Einsatz. Diese Ventile begrenzen den Hochdruck in dem sie den Stelldruck der Pumpe reduzieren und dadurch die Pumpe ihr Verdrängungsvolumen reduziert.

Die Verstellcharakteristik der hydrostatischen Komponenten definiert die Art- und Weise wie der hydrostatische Fahrantrieb eine Zielgeschwindigkeit respektive Drehzahl erreicht. Das Beschleunigungsverhalten ergibt sich nur indirekt über die dynamische Vorgabe der Zielgeschwindigkeit. Dabei kann die Leistungsaufnahme an sich nicht direkt reduziert werden, sondern muss indirekt über Winkelbegrenzungen im Fahrantrieb erfolgen, die dann zu einer Reduzierung der Leistungsaufnahme führen.

Die Ansteuerung eines hydrostatischen Getriebes kann je nach Systemkonfiguration über einen Freiheitsgrad, beispielsweise bei Systemauslegungen mit einer Verstellpumpe und einem konstanten Motor, oder bis hin zu n+1 Freiheitsgraden bei Konfigurationen mit n verstellbaren Hydromotoren, verfügen.

Die Aufgabe der Erfindung ist die sukzessive analytische Ermittlung dieser Freiheitsgrade zur Realisierung eines Sollabtriebs Drehmomentes sowie die Berücksichtigung einer zusätzlichen Leistungslimitierung. Darüber hinaus soll die Erfindung auch eine Geschwindigkeitsvorgabe anstatt eines Sollabtriebs Drehmoment realisieren können. Hierbei ist wieder rum eine Leistungslimitierung mit zu berücksichtigen.

Das drehmomentenbasierte Fahren (Vorgabe einer Sollabtriebs Drehmomentes) sowie das geschwindigkeitsbasierte Fahren (Vorgabe einer Sollabtriebdrehzahl) soll hierbei gleitend kombinierbar sein. Dies bedeutet das für den Übergang vom geschwindigkeitsbasierten Fahren in das drehmomentbasierte Fahren keine Modeumschaltung notwendig ist. Über die Sollsignale kann hier ein gleitendes bzw. kontinuierliches Umschalten realisiert werden.

KURZFASSUNG

Die vorliegende Erfindung basiert auf der Idee, dass der hydrostatische Fahrantrieb abwechselnd durch ein Sollabtrieb Drehmoment oder eine Sollabtriebdrehzahl angesteuert werden kann. Darüber hinaus basiert die vorliegende Erfindung auf der Idee, dass eine Leistungslimitierung sowohl für eine Sollabtriebdrehmomentsteuerung als auch für eine Sollabtriebdrehzahlsteuerung ausgeführt wird.

Gemäß einer Ausführungsform der vorliegenden Erfindung wird ein Verfahren zur Leistungslimitierung eines hydrostatischen Fahrantriebs bereitgestellt, wobei der Fahrantrieb mit einer Hydropumpe zur Druckmittelversorgung eines mit einem Abtrieb koppelbaren Hydromotors des Fahrantriebes versehen ist, wobei der durch die Hydropumpe erzeugte Druck (und vorzugsweise der Schwenkwinkel des Hydromotors) regelbar ist, wobei der hydrostatische Fahrantrieb abwechselnd durch ein Sollabtrieb Drehmoment oder eine Sollabtriebdrehzahl angesteuert wird, wobei das Verfahren folgende Schritte umfasst:

    a. Erhalten des Befehls den hydrostatischen Fahrantrieb mittels eines Sollabtrieb Drehmomentes oder einer Sollabtriebdrehzahl anzusteuern;

b. Wenn der hydrostatische Fahrantrieb mittels eines Sollabtrieb Drehmomentes angesteuert werden soll, Berechnen eines durch die Hydropumpe erzeugten Solldruckes , der das gewünschte Sollabtrieb Drehmoment bereitstellen kann, unter Berücksichtigung eines Schluckvolumens des Hydromotors , wenn der hydrostatische Fahrantrieb mittels einer Sollabtriebdrehzahl angesteuert werden soll, Berechnen eines Sollschwenkwinkels der Hydropumpe , der die gewünschte Sollabtriebdrehzahl bereitstellen kann, unter Berücksichtigung des Schluckvolumens des Hydromotors ;

c. Erhalten einer Information über eine maximale Eingangsleistung der Hydropumpe ;

d. Wenn der hydrostatische Fahrantrieb mittels eines Sollabtrieb Drehmomentes angesteuert werden soll, Bearbeitung des im Schritt b. berechneten Solldrucks unter Berücksichtigung der maximalen Eingangsleistung , wenn der hydrostatische Fahrantrieb mittels einer Sollabtriebdrehzahl angesteuert werden soll, Berechnen eines maximalen Drucks , der durch die Hydropumpe erzeugt werden darf, unter Berücksichtigung des in Schritt b berechneten Sollschwenkwinkels der Hydropumpe und der maximalen Eingangsleistung, wobei wenn der hydrostatische Fahrantrieb mittels einer Sollabtriebsdrehzahl angesteuert werden soll, die Hydropumpe so geregelt wird, dass der maximale Druck, der durch die Hydropumpe erzeugt werden darf, nicht überstiegen wird.

Gemäß einer Ausführungsform der vorliegenden Erfindung wird ein Verfahren bereitgestellt, wobei der Hydromotor ein Radialkolbenmotor ist, wobei das Schluckvolumen des Hydromotors von einem Hydromotorschwenkwinkel abhängt, wobei die Berechnung des Hydromotorschwenkwinkels mittels einer Volumenstrombilanz und unter Berücksichtigung der aktuellen Geschwindigkeit des Hydromotors und der Hydropumpe erfolgt.

Gemäß einer Ausführungsform der vorliegenden Erfindung wird ein Verfahren bereitgestellt, wobei der hydrostatische Fahrantrieb mindestens zwei Hydromotoren umfasst.

Gemäß einer Ausführungsform der vorliegenden Erfindung wird ein Verfahren bereitgestellt, wobei, wenn der hydrostatische Fahrantrieb mittels eines Sollabtrieb Drehmomentes angesteuert werden soll, der im Schritt b. berechnete Solldruck in dem Schritt d unter Hinzunahme eines geschätzten oder erfassten Hydropumpenschwenkwinkels und der maximalen Eingangsleistung begrenzt wird.

Gemäß einer Ausführungsform der vorliegenden Erfindung wird ein Verfahren bereitgestellt, wobei der im Schritt d. begrenzte Druck durch einen Druckregler an der Hydropumpe umgesetzt wird.

Gemäß einer Ausführungsform der vorliegenden Erfindung wird ein Verfahren bereitgestellt, wobei der Hydropumpenschwenkwinkel mittels einer Volumenstrombilanz geschätzt wird, wobei in der genannten Volumenstrombilanz ein Leckagevolumenstrom berücksichtigt wird. Gemäß einer Ausführungsform der vorliegenden Erfindung wird ein Verfahren bereitgestellt, wobei der Leckagevolumenstrom durch diese Formel geschätzt wird:

$$Q_{Leak} = k_{off} + \Delta p \, kl$$

**wobei** $Q_{Leak}$ der Leckagevolumenstrom, $k_{off}$ ein Offsetfaktor, $kl$ druckabhängiger Leckagefaktor und $\Delta p$ der von der Hydropumpe erzeugte Druck ist.

KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:

Fig. 1 zeigt einen hydraulischen Schaltplan eines hydrostatischen Fahrantriebes gemäß dem Stand der Technik,

Fig. 2 zeigt das Verfahren zur Ansteuerung des hydrostatischen Fahrantriebes zur Realisierung eines Sollabtriebs Drehmomentes $T_{Drv}$ gemäß einem Ausführungsbeispiel der vorliegenden Erfindung;

Fig. 3 zeigt das Verfahren zur Ansteuerung des hydrostatischen Fahrantriebes zur Realisierung einer Sollabtriebdrehzahl $n_{soll}$ gemäß einem Ausführungsbeispiel der vorliegenden Erfindung,

Fig. 4 zeigt eine Möglichkeit die Übersetzung eines hydrostatischen Variators bestehend aus Pumpe und Motor einzustellen (eine Folgeverstellung) gemäß einem Ausführungsbeispiel der vorliegenden Erfindung.

DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

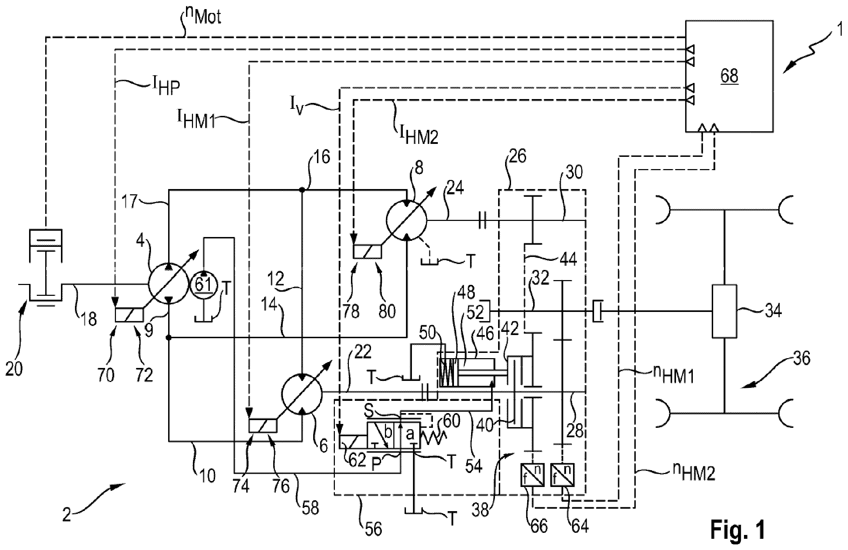

Gemäß Fig. 1 hat ein Fahrantrieb 1 ein hydrostatisches Getriebe 2 mit einer im Zugbetrieb des Fahrantriebs 1 als Hydropumpe arbeitenden Hydromaschine 4 und zwei im genannten Zugbetrieb als Hydromotoren arbeitenden Hydromaschinen 6 und 8 . Beide Hydromotoren 6, 8 sind mit der Hydropumpe 4 über Arbeitsleitungen 10 und 12 einerseits und 14 und 16 andererseits fluidisch parallel in einem geschlossenen hydraulischen Kreis verbunden. Die Hydromaschinen 4, 6, 8 sind in ihrem Verdrängungsvolumen verstellbar, wobei sie jeweils als Axialkolbenmaschine in Schrägscheibenbauweise oder in Schrägachsenbauweise ausgebildet sind.

Die Hydropumpe 4 ist über ihre Triebwelle 18 mit einer als Dieselmotor ausgestalteten Antriebsmaschine 20 verbunden. Ein erster Hydromotor 6 der beiden Hydromotoren 6, 8 hat eine erste Triebwelle 22 und der zweite Hydromotor 8 hat eine zweite Triebwelle 24. Dem hydrostatische Getriebe 2 ist als mechanisches Getriebe ein Summationsgetriebe 26 mit zwei Eingangswellen 28 und 30 nachgeschaltet. Die erste Eingangswelle 28 ist dabei drehfest mit der ersten Triebwelle 22 und die zweite Eingangswelle 30 drehfest mit der zweiten Triebwelle 24 verbunden. Eine Ausgangswelle 32 des Summationsgetriebes 26 ist drehfest mit einem Differential 34 einer Antriebsachse 36 verbunden.

Das Summationsgetriebe 26 umfasst eine als Lamellenkupplung ausgebildete Kupplung 38 . Diese hat einen ersten Kupplungsabschnitt 40, der drehfest mit der ersten Eingangswelle 28 verbunden ist. Zudem hat sie einen zweiten Kupplungsabschnitt 42, der über eine, rein schematisch dargestellte, Zahnradanordnung 44 mit der zweiten Eingangswelle 30 des Summationsgetriebes 26 drehfest verbunden ist. Durch Betätigung der Kupplung 38, das mit einem Einrücken des zweiten Kupplungsabschnittes 42 einhergeht, sind die beiden Eingangswellen 28 und 30 und damit die beiden Triebwellen 22 und 24 drehfest miteinander verbindbar.

Zur Betätigung der Kupplung 38 ist ein als Hydrozylinder ausgestaltetes Betätigungselement 46 vorgesehen. Dessen Kolben 48 ist über eine Kolbenstange zug- und schubfest mit dem zweiten Kupplungsabschnitt 42 gekoppelt. Der Hydrozylinder 46 hat einen Kolbenraum, in dem eine Druckfeder 50 angeordnet ist. Der Kolbenraum ist dabei permanent über eine Tankleitung mit einem Tank T verbunden. Kolbenstangenseitig weist der Hydrozylinder 46 einen Ringraum 52 auf, der über eine Steuerdruckleitung 54 mit einem Anschluss S eines als Druckregelventil ausgestalteten Regelgerätes 56 verbunden ist. Letztgenanntes hat einen Druckanschluss P, der über eine Druckleitung 58 mit einer Speisepumpe 61 verbunden ist, die zusammen mit der Hydropumpe 4 von der Triebwelle 18 angetrieben wird. Die Speisepumpe 61 saugt dabei aus dem Tank T Druckmittel an. Des Weiteren hat das Druckregelventil 56 einen Tankanschluss T, der mit dem Tank T verbunden ist. Das Druckregelventil 56 ist stetig verstellbar und hat zwei Endstellungen a, b. In einer ersten Endstellung a, in der der Ventilkörper über eine Feder 60 vorbelastet ist, ist der Druckanschluss P mit dem Steuerdruckanschluss S verbunden und der Anschluss T ist gegen den Anschluss S abgesperrt. In eine zweite Endstellung b ist das Druckregelventil 56, genauer gesagt dessen Ventilkörper, über einen Elektromagnet 62 betätigbar. Bei dessen Bestromung, und sofern die zweite Einstellung b vollständig eingenommen wird, ist der Steuerdruckanschluss S mit dem Tankanschluss T verbunden und der Druckanschluss P ist abgesperrt. In der ersten Endstellung a findet somit ausschließlich eine Beschickung oder Befüllung des Ringraumes 52 mit Druckmittel statt, wohingegen in der zweiten Endstellung b ausschließlich eine Entleerung oder Abfuhr von Druckmittel aus dem Ringraum 52 erfolgt. Zwischen den beiden Endstellungen a und b sind Regelstellungen des Ventilkörpers möglich, in denen die Anschlüsse P, S und T in jeweiliger Druckmittelverbindung zueinanderstehen. Zur Rückführung des am Steuerdruckanschluss S anstehenden, zu regelnden Steuerdruckes im Ringraum 52, ist der Ringraum 52 über eine Steuerleitung oder einen Steuerkanal fluidisch mit einer Steuerfläche des Ventilkörpers des Druckregelventils 56, die gleichwirkend mit der Feder 60 ist, verbunden.

Das mechanische Getriebe 26 weist weiterhin eine erste Drehzahlerfassungseinheit 64 auf, über die die Drehzahl der ersten Eingangswelle 28 und damit des ersten Kupplungsabschnitts 40 und der ersten Triebwelle 22 erfassbar ist. Über eine zweite Drehzahlerfassungseinheit 66 des mechanischen Getriebes 26 ist die Drehzahl des zweiten Kupplungsabschnittes 42 und damit mittelbar, in Kenntnis der Übersetzung der Zahnradanordnung 44, die Drehzahl der zweiten Eingangswelle 30 und der zweiten Triebwelle 24 erfassbar.

Der Hydropumpe 4 zugeordnet ist ein Regelgerät 70, das mit einer Verstelleinrichtung 72 zur Verstellung des Verdrängungsvolumens der Hydropumpe 4 zusammenwirkt. Der erste Hydromotor 6 und der zweite Hydromotor 8 haben ein Regelgerät 74 bzw. 78 und eine Verstelleinrichtung 76 bzw. 80. Die Verstelleinrichtung 72 kann den Schwenkwinkel der Hydropumpe 4 mittels Beeinflussung eines Stelldrucks beeinflussen. Entsprechend können die Verstelleinrichtungen 76 und 78 den Schwenkwinkel der Hydromotoren 6, 8 mittels Beeinflussung eines Stelldrucks beeinflussen. Ein Beispiel für eine Verstelleinrichtung, die den Schwenkwinkel der Hydropumpe mittels Beeinflussung eines Stelldrucks regelt, ist in DE 10 2018 211 586 A1 offenbart. Alternativ können eine oder mehrere der Verstelleinrichtungen elektrische Verstelleinheiten sein. Die vorliegende Erfindung ist nicht auf Hydromotoren 6, 8 beschränkt, die verstellt werden können. In anderen Ausführungsformen können die Hydromotoren auch konstante Motoren sein.

Die Antriebsmaschine 20, die Regelgeräte 70, 74 und 78, der Elektromagnet 62 sowie die Drehzahlerfassungseinheiten 64, 66 sind jeweils über eine Signalleitung mit der Steuereinrichtung 68 verbunden.

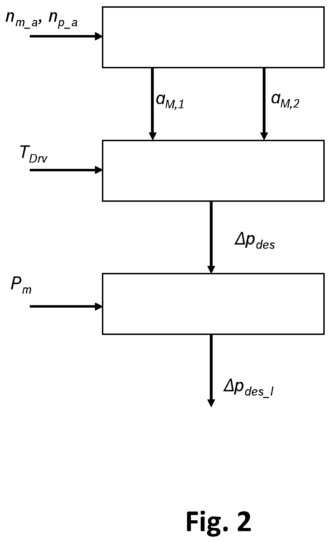

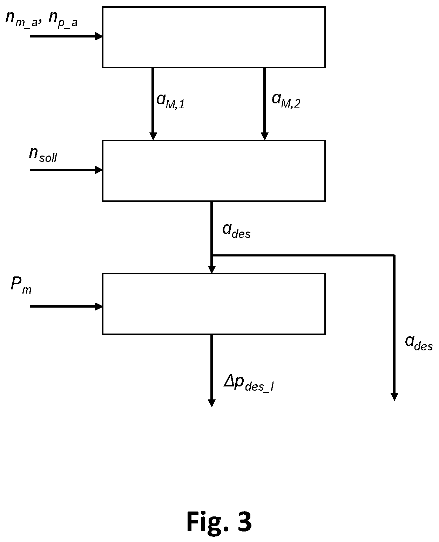

Im Folgenden wird mit Bezug auf Figuren 2 und 3 das Verfahren zur Leistungslimitierung des hydrostatischen Fahrantriebs kurz beschrieben. Danach werden die einzelnen Schritte des Verfahrens mehr im Detail beschrieben.

Zuerst wird ein Befehl erhalten den hydrostatischen Fahrantrieb 1 mittels eines Sollabtrieb Drehmomentes oder einer Sollabtriebdrehzahl anzusteuern.

Das Verfahren zur Ansteuerung des hydrostatischen Fahrantriebes zur Realisierung eines Sollabtriebs Drehmomentes $T_{Drv}$ ist in Figur 2 dargestellt.

Bei diesem Verfahren werden zunächst auf Basis der aktuellen erfassten Geschwindigkeit $n_{m\_a}$ der Hydromotoren 6, 8 und der aktuellen erfassten Geschwindigkeit $n_{p\_a}$ der Hydropumpe 4 mittels einer Volumenstrombilanz die notwendigen Schwenkwinkel $\alpha_{M,1}$, $\alpha_{M,2}$ für die Hydromotoren berechnet. Für den Fall, dass der Hydromotor 6, 8 ein konstanter Hydromotor ist, wird dieser erste Schritt ausfallen.

Anschließend wird auf Basis des ermittelten Hydromotorschwenkwinkels $\alpha_{M,1}$, $\alpha_{M,2}$ ein durch die Hydropumpe 4 erzeugter Solldruck $\Delta p_{des}$ berechnet, der das gewünschte Sollabtrieb Drehmoment $T_{Drv}$ bereitstellt.

In einem weiteren Schritt wird der ermittelte Solldruck $\Delta p_{des}$ unter Hinzunahme einer maximalen Eingangsleistung $P_m$ des Hydrostaten zur Leistungslimitierung begrenzt. Der resultierende Druck $\Delta p_{des\_l}$ wird anschließend von einem Druckregler an der Hydropumpe 4 realisiert.

Das Verfahren zur Ansteuerung des hydrostatischen Fahrantriebes zur Realisierung einer Sollabtriebdrehzahl $n_{soll}$ ist in Figur 3 dargestellt.

Bei diesem Verfahren werden zunächst auf Basis der aktuellen erfassten Geschwindigkeit $n_{m\_a}$ der Hydromotoren 6, 8 und der aktuellen erfassten Geschwindigkeit $n_{p\_a}$ der Hydropumpe 4 mittels einer Volumenstrombilanz die notwendigen Schwenkwinkel $\alpha_{M,1}$, $\alpha_{M,2}$ für die Hydromotoren 6, 8 berechnet. Für den Fall, dass der Hydromotor 6, 8 ein konstanter Hydromotor ist, wird dieser erste Schritt ausfallen.

Anschließend wird auf Basis des ermittelten Hydromotorschwenkwinkels $\alpha_{M,1}$, $\alpha_{M,2}$ ein Sollschwenkwinkel $\alpha_{des}$ der Hydropumpe 4 berechnet, der die gewünschte Sollabtriebdrehzahl $n_{soll}$ bereitstellt .

In einem weiteren Schritt wird unter Berücksichtigung des berechneten Sollschwenkwinkels $\alpha_{des}$ der Hydropumpe 4 und der maximalen Eingangsleistung $P_m$ ein maximaler durch die

Hydropumpe 4 erzeugter Druck $\Delta p_{des\_l}$ berechnet, damit dieser berechnete Wert nicht überschritten wird und die maximale Eingangsleistung nicht überschritten wird.

Der resultierende begrenzte Sollschwenkwinkel $\Delta p_{des\_l}$ wird anschließend von einem Druckregler oder durch eine Schwenkwinkelsteuerung an der Hydropumpe 4 realisiert.

Wie bereits angesprochen, wird nun das Verfahren zur Leistungslimitierung des hydrostatischen Fahrantriebs im Detail beschrieben.

Wie in dem Verlauf der Beschreibung beschrieben wurde, wird der Hydromotorschwenkwinkel mittels einer Volumenstrombilanz berechnet. Vorzugsweise werden die leckagebedingten Verluste in dieser Volumenstrombilanz nicht mitberücksichtigt. In dieser Volumenstrombilanz wird angenommen, dass der hydrostatische Antrieb zwei Hydromotoren 4, 6 umfasst. Es ist dem Fachmann klar, dass diese Erfindung mit einer beliebigen Anzahl von Hydromotoren benutzt werden kann.

Die Volumenstrombilanz ist in Formel 1 dargestellt:

*Formel 1*

$$V_{GP}\alpha_P n_P = V_{GM,1}\alpha_{M,1}n_{M,1} + V_{GM,2}\alpha_{M,2}n_{M,2}$$

Wobei $V_{GP}$ das maximale Fördervolumen der Hydraulikpumpe 4, $V_{GM,n}$ die maximalen Schluckvolumen des Hydraulikmotoren (1..n) sind. Darüber hinaus ist $\alpha_P$ der normierte Schwenkwinkel der Hydropumpe 4, $\alpha_{M,n}$ der normierte Schwenkwinkel der Hydromotoren 6, 8, $n_P$ die Hydropumpendrehzahl und $n_{M,n}$ die Hydromotordrehzahl.

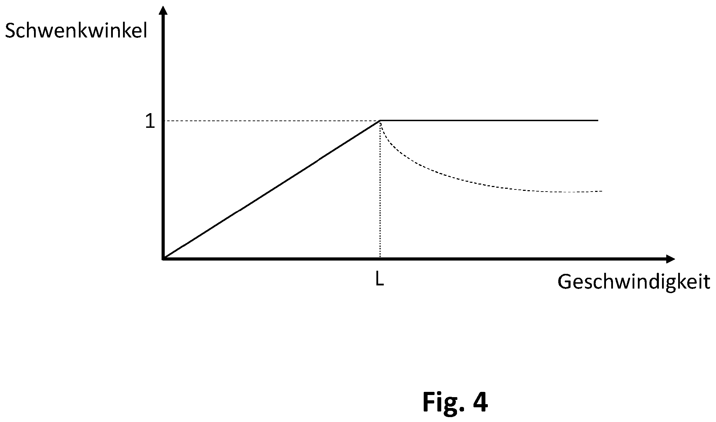

Formel 1 wird zunächst erst nur für einen Hydromotor aufgelöst und resultiert unter Berücksichtigung der Folgeverstellung, die in Figur 4 dargestellt ist, dementsprechend in Formel 2.

*Formel 2*

$$\alpha_{M,1} = \min\left(\frac{V_{GP}\alpha_P n_P - V_{GM,2}\alpha_{M,2\_Old}n_{M,2}}{V_{GM,1}\,n_{M,1}}, 1\right)$$

Die in Figur 4 dargestellte Folgeverstellung basiert auf einer seriellen Verstellung der hydraulischen Komponenten, wobei zunächst der Schwenkwinkel der Pumpe ausgenutzt wird (durchgezogene Linie) und im Anschluss daran ein oder mehrere Hydromotoren in ihrem Schluckvolumen reduziert werden (gestrichelte Linie).

Als Folge der "min" (Minimum) Funktion in Formel 2 wird das Schluckvolumen der Hydromotoren erst reduziert, sobald sich die Geschwindigkeit für den in Figur 4 dargestellten Überlappungspunkt (L) eingestellt hat.

Bei Systemen mit mehreren Motoren werden zu Berechnung der verbleibenden Motoren die Schluckvolumina aus dem vorhergehenden Rechenzyklus verwendet. Im Initialzustand ($v_{Fahrzeug}$=0 km/h) kann man davon ausgehen, dass alle Hydromotoren ihr maximales Schluckvolumen aufweisen. In diesem Zusammenhang ist $\alpha_{M,2\_Old}$ der normierte Schwenkwinkel des zweiten Hydromotors aus dem vorhergehenden Zyklus. Das Fördervolumen der Pumpe wird mit 95% bzw. dem Faktor 0.95 angenommen.

Die beiden Hydromotoren werden entsprechend dem Prinzip der Folgeverstellung zunächst auf maximales Schluckvolumen eingestellt.

Für mehrmotorige Fahrantriebsvarianten besteht die Möglichkeit Formel 2 entsprechend des zweiten Hydromotors umzustellen. Hierdurch erhält man Formel 3, wobei $\alpha_{M,1}$ bereits über Formel 2 ermittelt wurde.

### Formel 3

$$\alpha_{M,2} = \min \left( \frac{V_{GP}\alpha_P n_P - V_{GM,1}\alpha_{M,1}n_{M,1}}{V_{GM,2}\ n_{M,2}}, 1 \right)$$

Dieser erste Schritt gilt sowohl für die Sollabtrieb Drehmoment Ansteuerung als auch für die Sollabtriebdrehzahl Ansteuerung des hydrostatischen Fahrantriebs 1.

Wenn der hydrostatische Fahrantrieb 1 mittels eines Sollabtrieb Drehmomentes angesteuert werden soll, wird nun ein durch die Hydropumpe 4 erzeugter Solldruck $\Delta p_{des}$ berechnet, der das gewünschte Sollabtrieb Drehmoment $T_{Drv}$ bereitstellen kann, unter Berücksichtigung der in dem vorherigen Schritt berechneten Hydromotorschwenkwinkel $\alpha_{M,1}$, $\alpha_{M,2}$.

Dafür wird eine Vereinfachung (Formel 4) der in der Deutsche Patentanmeldung Nummer 10 2019 218901.6 beschriebenen Formel angewendet.

### Formel 4

$$\Delta p_{des} = \frac{(T_{Drv}2\pi)}{V_{GM,1}\alpha_{m,1}i_1 + V_{GM,2}\alpha_{m,2}i_2}$$

In dieser Formel ist $T_{Drv}$ das gewünschte Sollabtrieb Drehmoment und $i_1$ und $i_2$ die Übersetzungsstufe von den Hydromotoren zum Getriebeausgang.

Alternativ, wenn der hydrostatische Fahrantrieb 1 mittels einer Sollabtriebdrehzahl $n_{soll}$ angesteuert werden soll, wird nun ein Sollschwenkwinkel $\alpha_{des}$ der Hydropumpe 4 berechnet, der die gewünschte Sollabtriebdrehzahl $n_{soll}$ bereitstellen kann, unter Berücksichtigung der in dem vorherigen Schritt berechneten Hydromotorschwenkwinkel $\alpha_{M,1}$, $\alpha_{M,2}$.

Insbesondere wird der Sollschwenkwinkel $\alpha_{des}$ der Hydropumpe 4 mittels einer Volumenstrombilanz berechnet (siehe Formel 5).

### Formel 5

$$\alpha_{des} = \frac{V_{GM,1}\ \alpha_{M,1}n_{M,1}\ +\ V_{GM,2}\alpha_{M,2}n_{M,2}\ +\ Q_{Leak}}{V_{GP}n_P}$$

Wobei $Q_{Leak}$ der Leckagevolumenstrom ist.

Der aufgrund der Leckage verloren gegangene Leckagevolumenstrom wird über eine Erweiterung der in der Patentanmeldung DE 102013217708 beschriebene Leckageschätzung ermittelt.

*Formel 6*

$$Q_{Leak} = k_{off} + \Delta p\, kl$$

wobei $k_{off}$ ein Offsetfaktor, $kl$ druckabhängiger Leckagefaktor und $\Delta p$ der von der Hydropumpe 4 erzeugte Druck ist.

Wie in Figur 1 dargestellt ist, sind in der Regel die Hydraulikmotoren über ein Getriebe fest mechanisch miteinander verkoppelt. Aus diesem Grund kann man die Hydromotordrehzahl des zweiten Hydromotors als Produkt aus der Hydromotordrehzahl des ersten Hydromotors und einer Übersetzung beschreiben ($n_{M,1} = n_{M,2}*i_{M12}$). Damit lässt sich daher der Sollschwenkwinkel berechnen.

*Formel 7*

$$\alpha_{des} = \frac{V_{GM,1}\,\alpha_{M,1}\,n_{M,1} + V_{GM,2}\alpha_{M,2}n_{M,1}i_{M12} + k_{off} + \Delta p\, kl}{V_{GP}n_P}$$

In dem nächsten Schritt wird die Leistungslimitierung durchgeführt. Die Leistungslimitierung erfolgt in einer ähnlichen Art und Weise für die beiden Fälle, dass der hydrostatische Fahrantrieb 1 mittels eines Sollabtrieb Drehmomentes oder einer Sollabtriebdrehzahl angesteuert werden soll.

In diesem Schritt wird die Formel 8 benutzt, um unter Berücksichtigung einer maximalen Eingangsleistung $P_m$, den berechneten Solldruck bzw. den berechneten Sollschwenkwinkel zu limitieren.

Insbesondere, wenn der hydrostatische Fahrantrieb 1 mittels eines Sollabtrieb Drehmomentes $T_{Drv}$ angesteuert werden soll, wird der durch die Formel 8 berechnete Maximaldruck $\Delta p_{Lim}$ mit dem berechneten Druck $\Delta p_{des}$ vergleichen und, wenn der berechnete Solldruck größer als 0 ist, wird der kleinere zwischen dem berechneten Solldruck $\Delta p_{des}$ und dem mittels Formel 8 berechneten Solldruck $\Delta p_{Lim}$ als gewünschter Druck $\Delta p_{des\_l}$ genommen (umgekehrt, wenn der berechnete Solldruck kleiner als 0 ist, wird der größere Druck genommen).

*Formel 8*

$$\Delta p_{Lim} = \frac{\vartheta_P P_m}{V_{GP}\alpha_P}$$

Wobei $\vartheta_P$ der Wirkungsgrad des hydrostatischen Fahrantriebs ist.

Wenn der hydrostatische Fahrantrieb 1 mittels eines Sollabtrieb Drehmomentes angesteuert werden soll, kann der in Formel 8 enthaltene Schwenkwinkel $\alpha_P$ entweder geschätzt oder gemessen werden.

Für die Schätzung kann man Formel 7 benutzen, wobei als $\Delta p$ der berechnete Solldruck $\Delta p_{des}$ genommen wird.

Alternativ, wenn der hydrostatische Fahrantrieb 1 mittels einer Sollabtriebdrehzahl angesteuert werden soll, wird unter Berücksichtigung des berechneten Sollschwenkwinkels $\alpha_{des}$ der Hydropumpe 4 und der maximalen Eingangsleistung $P_m$ einen maximalen Druck $\Delta p_{des\_l}$ berechnet, der durch die Hydropumpe 4 erzeugt werden darf, damit die maximale Eingangsleistung $P_m$ nicht überschritten wird. Insbesondere wird bei der Berechnung des maximalen Drucks $\Delta p_{des\_l}$ der durch die Formel 7 berechnete Sollschwenkwinkel $\alpha_P$ für den in Formel 8 enthaltenen Schwenkwinkel benutzt.

Die Patentanmeldung WO 15 007 465 A1 zeigt ein Beispiel von einem System zum Regeln des Schwenkwinkels, das in dieser Erfindung benutzt werden kann.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

**Patentansprüche**

1. Verfahren zur Leistungslimitierung eines hydrostatischen Fahrantriebs (1), wobei der Fahrantrieb (1) mit einer Hydropumpe (4) zur Druckmittelversorgung eines mit einem Abtrieb koppelbaren Hydromotors (6, 8) des Fahrantriebes (1) versehen ist, wobei der durch die Hydropumpe (4) erzeugte Druck regelbar ist, wobei der hydrostatische Fahrantrieb (1) abwechselnd durch ein Sollabtriebs Drehmoment ($T_{Drv}$) oder eine Sollabtriebsdrehzahl ($n_{soll}$) angesteuert wird,

wobei das Verfahren folgende Schritte umfasst:

a. Erhalten des Befehls den hydrostatischen Fahrantrieb (1) mittels eines Sollabtrieb Drehmomentes ($T_{Drv}$) oder einer Sollabtriebsdrehzahl ($n_{soll}$) anzusteuern;
b. Wenn der hydrostatische Fahrantrieb (1) mittels eines Sollabtriebs Drehmomentes ($T_{Drv}$) angesteuert werden soll, Berechnen eines durch die Hydropumpe (4) erzeugten Solldruckes ($\Delta p_{des}$), der das gewünschte Sollabtriebs Drehmoment ($T_{Drv}$) bereitstellen kann, unter Berücksichtigung eines Schluckvolumens des Hydromotors (6, 8), wenn der hydrostatische Fahrantrieb (1) mittels einer Sollabtriebsdrehzahl ($n_{soll}$) angesteuert werden soll, Berechnen eines Sollschwenkwinkels ($\alpha_{des}$) der Hydropumpe (4), der die gewünschte Sollabtriebsdrehzahl ($n_{soll}$) bereitstellen kann, unter Berücksichtigung des Schluckvolumens des Hydromotors (6, 8);

wobei das Verfahren durch die folgenden Schritte gekennzeichnet ist:

c. Erhalten einer Information über eine maximale Eingangsleistung ($P_m$) der Hydropumpe (4);
d. Wenn der hydrostatische Fahrantrieb (1) mittels eines Sollabtriebs Drehmomentes ($T_{Drv}$) angesteuert werden soll, Limitieren des im Schritt b. berechneten Solldrucks ($\Delta p_{des}$) unter Berücksichtigung der maximalen Eingangsleistung ($P_m$), wenn der hydrostatische Fahrantrieb (1) mittels einer Sollabtriebsdrehzahl ($n_{soll}$) angesteuert werden soll, Berechnen eines maximalen Drucks ($\Delta p_{des\_l}$), der durch die Hydropumpe (4) erzeugt werden darf, unter Berücksichtigung des in Schritt b berechneten Sollschwenkwinkels ($\alpha_{des}$) der Hydropumpe (4) und der maximalen Eingangsleistung ($P_m$), wobei wenn der hydrostatische Fahrantrieb (1) mittels einer Sollabtriebsdrehzahl ($n_{soll}$) angesteuert werden soll, die Hydropumpe (4) so geregelt wird, dass der maximale Druck ($\Delta p_{des\_l}$), der durch die Hydropumpe (4) erzeugt werden darf, nicht überstiegen wird.

2. Verfahren nach Anspruch 1, wobei der hydrostatische Fahrantrieb (1) mindestens zwei Hydromotoren (6, 8) umfasst.

3. Verfahren nach einem der Ansprüche 1 oder 2, wobei, wenn der hydrostatische Fahrantrieb (1) mittels eines Sollabtriebs Drehmomentes ($T_{Drv}$) angesteuert werden soll, der im Schritt b. berechnete Solldruck in dem Schritt d unter Hinzunahme eines geschätzten oder erfassten Hydropumpenschwenkwinkels und der maximalen Eingangsleistung begrenzt wird.

4. Verfahren nach Anspruch 3, wobei der im Schritt d. begrenzte Druck durch einen Druckregler an der Hydropumpe (4) umgesetzt wird.

5. Verfahren nach einem der Ansprüche 3 oder 4, wobei der Hydropumpenschwenkwinkel mittels einer Volumenstrombilanz geschätzt wird, wobei in der genannten Volumenstrombilanz ein Leckagevolumenstrom berücksichtigt wird.

6. Verfahren nach Anspruch 5, wobei der Leckagevolumenstrom durch diese Formel geschätzt wird:

$$Q_{Leak} = k_{off} + \Delta p \, kl$$

wobei $Q_{Leak}$ der Leckagevolumenstrom, $k_{off}$ ein Offsetfaktor, $kl$ druckabhängiger Leckagefaktor und $\Delta p$ der von der Hydropumpe (4) erzeugte Druck ist.

**Claims**

1. Method for power limitation of a hydrostatic traction drive (1), wherein the traction drive (1) is provided with a hydraulic pump (4) for the pressure medium supply of a hydraulic motor (6, 8), which can be coupled to an output, of the traction drive (1), wherein the pressure generated by the hydraulic pump (4) is controllable, wherein the hydrostatic traction drive (1) is alternately actuated by a setpoint output torque ($T_{Drv}$) or a setpoint output speed ($n_{soll}$),

wherein the method comprises the following steps:

a. receiving the command to actuate the hydrostatic traction drive (1) by means of a setpoint output torque ($T_{Drv}$) or a setpoint output speed ($n_{soll}$);
b. if the hydrostatic traction drive (1) is to be actuated by means of a setpoint output torque ($T_{Drv}$), calculating a setpoint pressure ($\Delta p_{des}$) which is generated by the hydraulic pump (4) and can provide the desired setpoint output torque ($T_{Drv}$), taking into account a displacement of the hydraulic motor (6, 8); if the hydrostatic traction drive (1) is to be actuated by means of a setpoint output speed ($n_{soll}$), calculating a setpoint swash angle ($\alpha_{des}$) of the hydraulic pump (4), which can provide the desired setpoint output speed ($n_{soll}$), taking into account the displacement of the hydraulic motor (6, 8);

wherein the method is **characterized by** the following steps:

c. receiving information about a maximum input power ($P_m$) of the hydraulic pump (4);
d. if the hydrostatic traction drive (1) is to be actuated by means of a setpoint output torque ($T_{Drv}$), limiting the setpoint pressure ($\Delta p_{des}$) calculated in step b., taking into account the maximum input power ($P_m$); if the hydrostatic traction drive (1) is to be actuated by means of a setpoint output speed ($n_{soll}$), calculating a maximum pressure ($\Delta p_{des\_l}$) that may be generated by the hydraulic pump (4), taking into account the setpoint swash angle ($\alpha_{des}$) calculated in step b of the hydraulic pump (4) and the maximum input power ($P_m$), wherein, if the hydrostatic traction drive (1) is to be actuated by means of a setpoint output speed ($n_{soll}$), the hydraulic pump (4) is controlled in such a way that the maximum pressure ($\Delta p_{des\_l}$) that may be generated by the hydraulic pump (4) is not exceeded.

2. Method according to Claim 1, wherein the hydrostatic traction drive (1) comprises at least two hydraulic motors (6, 8).

3. Method according to either of Claims 1 and 2, wherein, if the hydrostatic traction drive (1) is to be actuated by means of a setpoint output torque ($T_{Drv}$), the setpoint pressure calculated in step b. is limited in step d by adding an estimated or detected hydraulic pump swash angle and the maximum input power.

4. Method according to Claim 3, wherein the pressure limited in step d. is implemented by a pressure regulator at the hydraulic pump (4).

5. Method according to either of Claims 3 and 4, wherein the hydraulic pump swash angle is estimated by means of a volume flow balance, wherein a leakage volume flow is taken into account in the said volume flow balance.

6. Method according to Claim 5, wherein the leakage volume flow is estimated by this formula:

$$Q_{Leak} = k_{off} + \Delta p\, kl,$$

where $Q_{Leak}$ is the leakage volume flow, $k_{off}$ is an offset factor, kl is a pressure-dependent leakage factor, and $\Delta p$ is the pressure generated by the hydraulic pump (4).

**Revendications**

1. Procédé de limitation de puissance d'un système d'entraînement hydrostatique (1), le système d'entraînement (1) étant pourvu d'une pompe hydraulique (4) destinée à alimenter en fluide sous pression un moteur hydraulique (6, 8) du système d'entraînement (1) pouvant être couplé à une sortie, la pression générée par la pompe hydraulique (4) pouvant être régulée, le système d'entraînement hydrostatique (1) étant piloté en alternance par un couple de rotation de sortie de consigne ($T_{Drv}$) ou une vitesse de rotation de sortie de consigne ($n_{soll}$),

le procédé comprenant des étapes suivantes :

a. obtention de l'instruction de piloter le système d'entraînement hydrostatique (1) au moyen d'un couple de rotation de sortie de consigne ($T_{Drv}$) ou d'une vitesse de rotation de sortie de consigne ($n_{soll}$) ;

b. lorsque le système d'entraînement hydrostatique (1) doit être piloté au moyen d'un couple de rotation de sortie de consigne ($T_{Drv}$), calcul d'une pression de consigne ($\Delta p_{des}$) générée par la pompe hydraulique (4), qui peut fournir le couple de rotation de sortie de consigne ($T_{Drv}$) souhaité, en tenant compte d'un volume absorbé du moteur hydraulique (6, 8) lorsque le système d'entraînement hydrostatique (1) doit être piloté au moyen d'une vitesse de rotation de sortie de consigne ($n_{soll}$), calcul d'un angle de pivotement de consigne ($\alpha_{des}$) de la pompe hydraulique (4), qui peut fournir la vitesse de rotation de sortie de consigne ($n_{soll}$) souhaitée, en tenant compte du volume absorbé du moteur hydraulique (6, 8) ;

le procédé étant **caractérisé par** les étapes suivantes :

c. obtention d'une information sur une puissance d'entrée maximale ($P_m$) de la pompe hydraulique (4) ;

d. lorsque le système d'entraînement hydrostatique (1) doit être piloté au moyen d'un couple de rotation de sortie de consigne ($T_{Drv}$), limitation de la pression de consigne ($\Delta p_{des}$) calculée dans l'étape b. en tenant compte de la puissance d'entrée maximale ($P_m$), lorsque le système d'entraînement hydrostatique (1) doit être piloté au moyen d'une vitesse de rotation de sortie de consigne ($n_{soll}$), calcul d'une pression maximale ($\Delta p_{des\_l}$), qui est autorisée à être générée par la pompe hydraulique (4), en tenant compte de l'angle de pivotement de consigne ($\alpha_{des}$) calculé dans l'étape b de la pompe hydraulique (4) et de la puissance d'entrée maximale ($P_m$), la pompe hydraulique (4) étant régulée de telle sorte, lorsque le système d'entraînement hydrostatique (1) doit être piloté au moyen d'une vitesse de rotation de sortie de consigne ($n_{soll}$) que la pression maximale ($\Delta p_{des\_l}$), qui est autorisée à être générée par la pompe hydraulique (4), n'est pas dépassée.

2. Procédé selon la revendication 1, le système d'entraînement hydrostatique (1) comprenant au moins deux moteurs hydrauliques (6, 8).

3. Procédé selon l'une des revendications 1 ou 2, la pression de consigne calculée dans l'étape b étant limitée dans l'étape d en ajoutant un angle de pivotement de pompe hydraulique estimé ou détecté et la puissance d'entrée maximale lorsque le système d'entraînement hydrostatique (1) doit être piloté au moyen d'un couple de rotation de sortie de consigne ($T_{Drv}$).

4. Procédé selon la revendication 3, la pression limitée dans l'étape d. étant mise en œuvre par un régulateur de pression sur la pompe hydraulique (4).

5. Procédé selon l'une des revendications 3 ou 4, l'angle de pivotement de pompe hydraulique étant estimé au moyen d'un bilan de débit volumique, un débit volumique de fuite étant pris en compte dans ledit bilan de débit volumique.

6. Procédé selon la revendication 5, le débit volumique de fuite étant estimé par cette formule :

$$Q_{Leak} = k_{off} + \Delta\rho \; kl$$

$Q_{Leak}$ étant le débit volumique de fuite, $k_{off}$ un facteur de décalage, $kl$ un facteur de fuite dépendant de la pression et $\Delta p$ la pression générée par la pompe hydraulique (4).

Fig. 1

EP 3 954 926 B1

$n_{m\_a}, n_{p\_a}$ →

↓ $a_{M,1}$    ↓ $a_{M,2}$

$T_{Drv}$ →

↓ $\Delta p_{des}$

$P_m$ →

↓ $\Delta p_{des\_l}$

**Fig. 2**

$n_{m\_a}, n_{p\_a}$ →

$a_{M,1}$     $a_{M,2}$

$n_{soll}$ →

$a_{des}$

$P_m$ →

$\Delta p_{des\_l}$

$a_{des}$

**Fig. 3**

**Fig. 4**

EP 3 954 926 B1

**EP 3 954 926 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014224337 A1
- DE 102018211586 A1
- DE 102019218901
- DE 102013217708
- WO 15007465 A1